# FASCICULE DE BREVET EUROPEEN

(11) **EP 3 583 330 B1**
(45) Date de publication et mention de la délivrance du brevet: **21.04.2021**
(21) Numéro de dépôt: 18706824.2
(22) Date de dépôt: 14.02.2018
(51) Int. Cl.: F16H 7/08

(54) **TENDEUR DE COURROIE**
RIEMENSPANNER
BELT TENSIONER

(30) Priorité: 14.02.2017 FR 1751196
(43) Date de publication de la demande: 25.12.2019
(73) Titulaire: Hutchinson, 75008 Paris (FR)
(72) Inventeur: GUILLOT, Benoît, 37270 Larcay (FR)
(74) Mandataire: Gevers & Orès
(86) Numéro de dépôt international: PCT/FR2018/050357
(87) Numéro de publication internationale: WO 2018/150137

(56) Documents cités:
- DE-A1- 19 609 420
- JP-A- 2001 221 306
- US-A1- 2010 105 506

## Description

L'invention concerne un tendeur de courroie.

Un tendeur de ce type peut notamment être rencontré dans le domaine automobile.

Un tel tendeur est par exemple proposé dans le document US 5 967 923. (D1).

Le tendeur proposé dans ce document est reproduit sur la figure 1, qui comprend les figures 1(a) et 1(b).

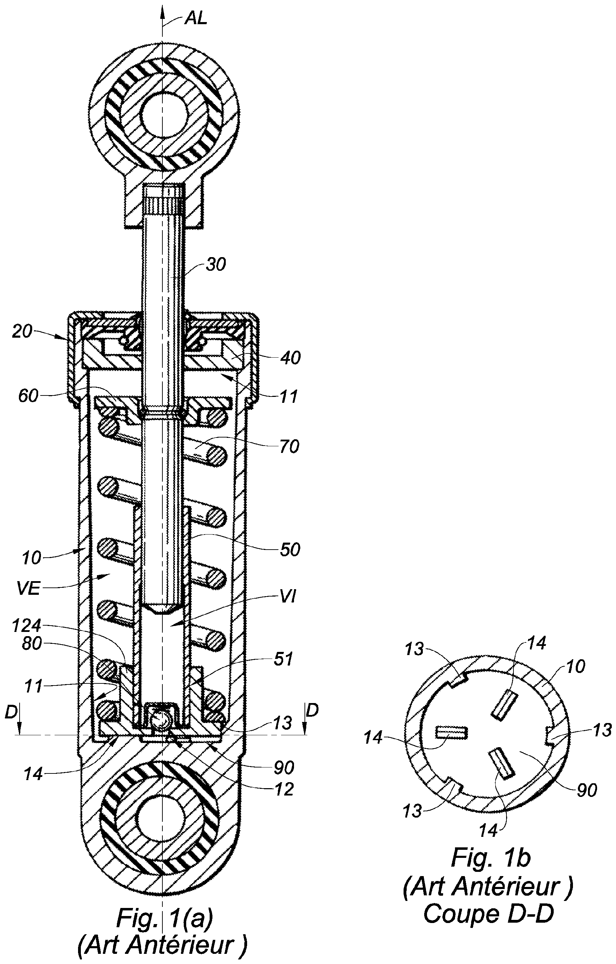

La figure 1(a) est une vue en coupe longitudinale du tendeur et la figure 1(b) une vue selon la coupe D-D de la figure 1(a).

Ce tendeur 100 est muni d'un axe longitudinal AL. Il comprend un corps 10 creux muni d'une ouverture 11 et d'un fond 12, le corps creux comportant un fluide. Il comprend également une chemise 20 agencée autour du corps 10 creux ainsi qu'un axe 30.

Ce tendeur prévoit un premier moyen de guidage 40 pour ledit axe 30, ce premier moyen de guidage étant fixé sur le corps 10 creux au niveau de son ouverture.

Il comprend également un deuxième moyen de guidage 50 pour ledit axe 30, ce deuxième moyen de guidage se présentant sous la forme d'un tube 50 définissant un volume interne VI dans lequel ledit axe 30 est destiné à se déplacer et un volume externe VE audit tube (50) au sein du corps 10 creux. L'extrémité 51 (extrémité basse) du tube 50 est montée fixe ( montée à force) dans une coupelle 124, cette dernière étant posée sur le fond 12 du corps 10 creux et plus précisément sur des excroissances 14, axiales, se projetant à partir du fond 12. La coupelle 124 est par ailleurs maintenue radialement par le biais d'autres d'excroissances 13, radiales et périphériques, appartenant au corps 10 creux.

Ce tendeur comprend aussi une autre coupelle 60 montée fixe sur ledit axe 30 entre les premier 40 et deuxième 50 moyens de guidage dudit axe 30.

Il comprend aussi un moyen de rappel élastique 70 agencé autour du tube 50 de sorte qu'il existe une distance non nulle, prise radialement, entre le moyen 70 de rappel élastique et le tube 50. Le moyen 70 de rappel élastique est maintenu entre les deux coupelles 60, 124.

Le tendeur comprend enfin une valve 80 montée au niveau de l'extrémité 51 basse du tube 50 et à laquelle est associée un passage 90 de communication fluidique pour autoriser le passage d'un fluide contenu dans le corps 10 creux entre le volume externe VE du tube 50 et le volume interne VI audit tube 50 (détente).

Le double guidage de l'axe 30 proposé dans ce document permet de bien maintenir l'axe 30 selon l'axe longitudinal AL du tendeur lors des mouvements (détente ou compression du tendeur) de l'axe 30 dans le tube 50.

Ceci est intéressant pour assurer un fonctionnement optimal du tendeur.

Cependant, avec la conception proposée dans ce document D1, le fluide susceptible de passer du volume externe VE au volume interne VI s'écoule entre le moyen 70 de rappel élastique et la paroi interne 11 du corps 10 creux, au risque d'être perturbé par la présence du moyen de rappel élastique (obstacle).

L'écoulement est alors perturbé et ne permet pas d'optimiser le fonctionnement du tendeur.

Un objectif de l'invention est de proposer un tendeur de courroie avec un fonctionnement optimisé, tant en détente qu'en compression.

A cet effet, l'invention propose un tendeur avec un axe longitudinal, comprenant :
- un corps creux muni d'une ouverture et d'un fond, le corps creux comportant un fluide ;
- une chemise agencée autour du corps creux,
- un axe,
- un premier moyen de guidage pour ledit axe, ce premier moyen de guidage étant fixé sur le corps creux au niveau de son ouverture ;
- un deuxième moyen de guidage pour ledit axe, ce deuxième moyen de guidage se présentant sous la forme d'un tube définissant un volume interne dans lequel ledit axe est destiné à se déplacer et un volume externe audit deuxième moyen de guidage au sein du corps creux ;
- une première coupelle montée fixe sur ledit axe entre les premier et deuxième moyens de guidage dudit axe ;
- une deuxième coupelle montée au niveau du fond ;
- un moyen de rappel élastique agencé autour du deuxième moyen de guidage de sorte qu'il existe une distance non nulle, prise radialement, entre le moyen de rappel élastique et le deuxième moyen de guidage, ledit moyen de rappel élastique étant maintenu entre la première coupelle et la deuxième coupelle ;
- une valve comportant une embase montée entre une extrémité du deuxième moyen de guidage et le fond du corps creux, valve à laquelle est associée au moins un canal de communication fluidique pour autoriser le passage d'un fluide contenu dans le corps creux entre le volume externe du deuxième moyen de guidage et le volume interne audit deuxième moyen de guidage; caractérisé en ce que
- ledit fond comprend une zone centrale, une zone périphérique surélevée par rapport à la zone centrale et une zone intermédiaire reliant la zone centrale à la zone périphérique ;
- la première coupelle comprend une première partie située en vis-à-vis de la zone périphérique et, une deuxième partie en vis-à-vis de la zone intermédiaire et en contact avec une base de l'embase, cette base étant elle-même en contact avec la zone centrale ;
- le moyen de rappel élastique est agencé pour prendre appui sur la première partie de la première coupelle ;
- ledit au moins un canal de communication fluidique est agencé pour déboucher en vis-à-vis de la deuxième partie de la première coupelle à une distance non nulle de cette deuxième partie,
cet agencement permettant de définir une région fluide du corps creux, définie autour du deuxième moyen de guidage jusqu'audit au moins canal de communication libre de tout obstacle.

Le tendeur selon l'invention pourra également présenter l'une au moins des caractéristiques suivantes, prise seule ou en combinaison :
- la chemise est montée mobile par rapport au corps et l'axe est monté fixe par rapport à la chemise ;
- le tendeur comporte un fourreau, dont une extrémité est au contact de la première partie de la première coupelle, le moyen de rappel élastique prenant alors appui sur cette extrémité du fourreau, le fourreau étant par ailleurs agencé autour du deuxième moyen de guidage entre le moyen de rappel élastique et le deuxième moyen de guidage à une distance non nulle, prise radialement, du deuxième moyen de guidage, de sorte que ladite région fluide du corps creux libre de tout obstacle est définie entre le fourreau et le deuxième moyen de guidage jusqu'audit au moins un canal de communication fluidique ;
- le moyen de rappel élastique est un ressort hélicoïdal ;
- la base de l'embase présente une dimension, prise radiaiement, strictement inférieure à la dimension, également prise radialement, de la zone centrale du fond du corps creux, de sorte qu'il existe un jeu, entre l'embase et la zone intermédiaire ;
- la valve comprend, en outre un moyen de rappel élastique dédié fixe par rapport à l'embase; et un organe de fermeture attaché au moyen de rappel élastique dédié et reposant sur l'embase ;
- l'organe de fermeture présente une masse comprise entre 50mg et 700mg et dans lequel le moyen de rappel élastique dédié est agencé pour appliquer une précharge comprise entre 0,05N et 0,4N dans une direction poussant l'organe de fermeture contre l'embase ;
- le moyen de rappel élastique dédié présente une raideur k comprise entre 30 N.m et 80 N.m ;
- la valve comporte une butée agencée pour contrôler la course de l'organe de fermeture ;
- la course de l'organe de fermeture est comprise entre 0,3mm et 2,5mm ;
- l'organe de fermeture étant une bille, l'embase comporte une partie interne tronconique pour coopérer avec la bille, cette partie interne tronconique étant définie par un angle compris entre 30° et 90°;
- le fluide contenu dans le corps creux est une huile ;
- l'huile présente un grade défini entre la norme ISO VG5 et la norme ISO VG150, ces normes étant définies par une viscosité cinématique selon la norme ISO 3448.

L'invention sera mieux comprise et d'autres buts, avantages et caractéristiques de celle-ci apparaîtront plus clairement à la lecture de la description qui suit et qui est faite au regard des figures annexées suivantes :
- La figure 2 représente un tendeur conforme à l'invention, selon une vue en coupe longitudinale ;
- La figure 3 représente une variante de réalisation du tendeur selon l'invention représenté sur la figure 2 ;
- La figure 4, qui comprend les figures 4(a) et 4(b) représente le tendeur de la figure 3, dans deux positions extrêmes ;
- La figure 5 est une vue agrandie de la figure 1, au niveau de la partie inférieur ;
- La figure 6 est une vue de la figure 1 selon la coupe A-A ;
- La figure 7 représente une variante de réalisation d'une valve employée dans un tendeur conforme à l'invention.

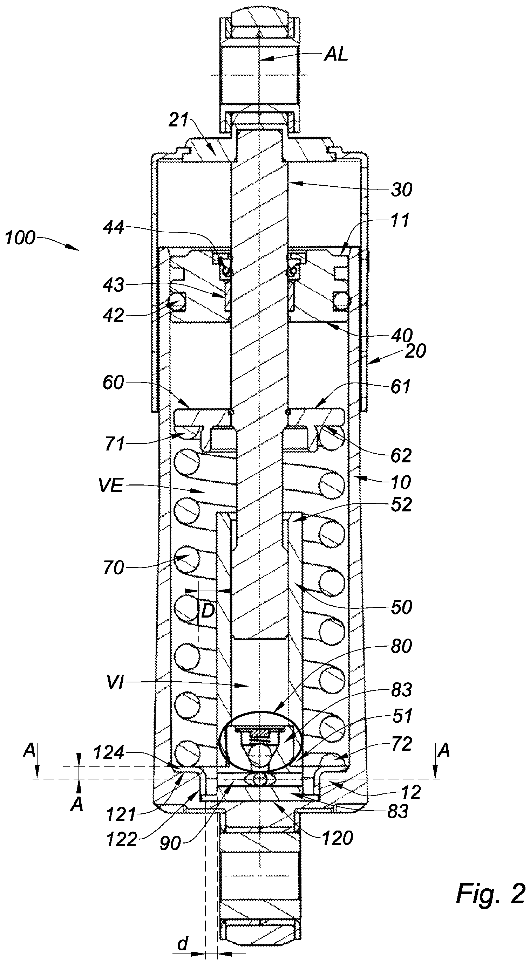

Un premier mode de réalisation d'un tendeur 100 conforme à l'invention est représenté à l'appui de la figure 2.

Plus précisément, la figure 2 est une vue en coupe longitudinale de ce tendeur 100, en position médiane.

Le tendeur 100 comprend un corps 10 creux muni d'une ouverture 11 et d'un fond 12 ainsi qu'une une chemise 20 agencée autour du corps 10 creux.

Le tendeur 100 comprend également un axe 30.

Dans le cas représenté sur la figure 2, la chemise 20 est montée mobile par rapport au corps 10 et l'axe 30 est monté fixe par rapport à la chemise 20. Cependant, il pourrait en être autrement, à savoir que la chemise 20 pourrait être montée fixe sur le corps 10 creux et l'axe monté mobile par rapport à la chemise 20, comme cela est par exemple le cas dans le document D1.

Le tendeur 100 comprend aussi un premier moyen de guidage 40 pour ledit axe 30. Le premier moyen 40 de guidage est fixé sur le corps 10 creux au niveau de son ouverture 11. Par ailleurs, on note que le premier moyen 40 de guidage forme un composant permettant de fermer le corps 10 creux, comportant un fluide. Aussi, pour éviter toute perte de fluide vers l'extérieur du corps creux, le moyen 40 de guidage pourra loger un (comme représenté sur la figure 2) ou plusieurs joints toriques 42 afin d'assurer l'étanchéité entre la paroi interne du corps 10 creux et le premier moyen 40 de guidage. De manière similaire et dans le même but, on pourra prévoir un joint 44 entre le premier moyen 40 de guidage et l'axe 30 pour éviter toute fuite de fluide.

De plus, afin de faciliter le guidage de l'axe 30 dans le moyen 40 de guidage, il est avantageux de prévoir un palier lisse 43 au niveau de l'interface axe30/ premier moyen 40 de guidage.

Le tendeur 100 comprend un deuxième moyen de guidage 50 pour ledit axe 30. Le deuxième moyen 50 de guidage se présente sous la forme d'un tube 50 définissant un volume interne VI dans lequel ledit axe 30 est destiné à se déplacer et un volume externe VE audit tube 50, au sein du corps 10 creux.

Le tube 50 est monté serré sur une embase 83 reposant sur le fond 12 du corps 10 creux et plus précisément sur une zone centrale 120 de de ce fond 12. Plus généralement, l'embase 83 est donc montée entre une extrémité 51 du tube 50 et le fond 12 du corps 10 creux.

En effet, le fond 12 comprend une zone centrale 120, une zone périphérique 121 surélevée par rapport à la zone centrale 120 et une zone intermédiaire 122 reliant la zone centrale 120 à la zone périphérique 121.

L'embase 83 présente une dimension d₁, prise radialement et au niveau dudit au moins un canal 90 de communication fluidique, inférieure à la dimension d₂, également prise radialement, de la zone centrale 120 du fond 12 du corps 10 creux. Ceci permet définir une distance d non nulle entre une embouchure de canal 90 et une coupelle 124. La coupelle 124 épouse donc globalement la forme de la zone intermédiaire 122 et de la zone de périphérie 121 du fond 12. Par ailleurs, l'embase 83 comprend en partie inférieure, une base 831 en contact avec la zone centrale 120 du fond 12 du corps 10 creux. La largeur (diamètre) de cette base 831 est comprise strictement entre d₁ et d₂.

Par « radialement », il convient de comprendre, dans toute la description, une direction perpendiculaire ou sensiblement perpendiculaire à l'axe longitudinal AL du tendeur 100.

La coupelle 124 est positionnée au niveau du fond 12 du corps 10 creux. Cette coupelle 124 comprend plus précisément une première partie 124A située en vis-à-vis de la zone périphérique 121 du fond 12, avec un jeu J_{A} non nul, et une deuxième partie 124B située en vis-à-vis de la zone intermédiaire 122 et en contact avec l'embase 83, et plus précisément en contact avec la base 831 de l'embase 83, Le contact entre la deuxième partie 124B de la coupelle 124 et l'embase 83 est donc rendu possible au niveau de la base 831. Par ailleurs, on comprend que la coupelle 124 repose sur la base 831 de l'embase 83.

On comprend donc que la coupelle 124 repose sur la base 831 de l'embase 83, au niveau du fond 12 du corps 10 creux.

Par ailleurs, et de manière générale, l'embase 83 présente avantageusement une dimension d₃ maximale (qui correspond à la dimension de la base 831), prise radialement, inférieure à la dimension d₂ telle que définie précédemment L'existence d'un jeu J radial (d₂ - d₃) permet un auto-centrage entre le tube 50 et l'axe 30.

Le tendeur 100 comprend une coupelle 60 montée fixe sur l'axe 30 entre le premier moyen de guidage 40 de l'axe 30 et le deuxième moyen de guidage de l'axe 30, formé par le tube 50.

Le tendeur 100 comprend encore un moyen de rappel élastique 70 agencé autour du tube 50 de sorte qu'il existe une distance D non nulle, prise radialement, entre le moyen 70 de rappel élastique et le tube 50. Il convient de noter que le moyen 70 de rappel élastique est maintenu entre les deux coupelles 60, 124.

Le moyen 70 de rappel élastique est avantageusement, comme représenté sur la figure 2, un ressort hélicoïdal.

L'embase 83 est maintenue axialement par le contact avec la coupelle 124, cette dernière subissant la force exercée par le moyen 70 de rappel. La compression du moyen 70 de rappel élastique sur la coupelle 124 permet de maintenir en permanence l'embase 83 en contact avec le fond 12, au niveau de la zone centrale 120. Pour ce faire, il est avantageux de prévoir un jeu entre la coupelle 124 et la zone périphérique 121 du fond 12.

Par ailleurs, le tendeur 100 comprend une valve 80 montée au niveau d'une extrémité 51 (extrémité basse) du tube 50 et à laquelle est associée au moins un canal 90 de communication fluidique.

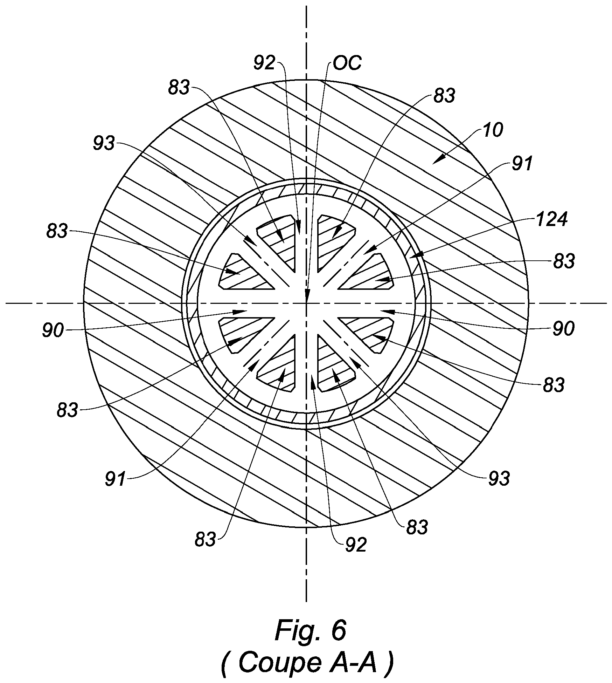

Avantageusement, on prévoit plusieurs canaux 90 ,91, 92 ,93 de communication fluidique, comme on peut le constater sur la figure 6, laquelle représente une coupe de la figure 2, selon la coupe A-A. Dans ce cas, la valve 80 débouche sur un orifice central OC. L'ensemble des canaux 90, 91, 92, 93 de communication fluidique vient distribuer et converger dans l'orifice central OC.

La valve 80 sera décrite de façon plus détaillée dans la suite de la description.

Ledit au moins un canal 90 de communication fluidique permet un passage de fluide, contenu dans le corps 10 creux, entre le volume externe VE au tube 50 et le volume interne VI du tube 50.

Le moyen de rappel élastique 70 est agencé pour prendre appui sur la coupelle 124. Ceci est cohérent avec le fait qu'il existe une distance D non nulle séparant, radialement, le moyen 70 de rappel élastique et le tube 50. Le tube 50 est en effet posé et maintenu sur le fond 12 par l'intermédiaire de l'embase 83, cette dernière étant fixée au tube 50, au niveau de son extrémité supérieure.

Ledit au moins un canal 90 de communication fluidique est agencé pour déboucher en vis-à-vis de la zone intermédiaire 122 à une distance d non nulle de cette zone intermédiaire 122. Ledit au moins un canal 90 de communication fluidique ne débouche donc pas, dans le volume externe VE, en vis-à-vis du moyen 70 de rappel élastique. En fonctionnement, l'écoulement du fluide passant du volume externe VE au volume interne VI ne risque donc pas d'être perturbé par le moyen 70 de rappel élastique.

Dans un cas avantageux et tel que représenté sur la figure 2, ledit au moins un canal 90 de communication fluidique comprend par ailleurs un axe longitudinal qui est agencé sensiblement radialement, et avantageusement radialement, en référence au tendeur 100. Autrement dit, ledit au moins un canal 90 de communication fluidique comprend un axe longitudinal qui est avantageusement sensiblement perpendiculaire à l'axe longitudinal du tendeur 100. Dans ce cas, on peut qualifier l'absence de perturbation provoquée par le moyen 70 de rappel élastique avec le décalage axial A (c'est-à-dire selon l'axe longitudinal du tendeur 100), non nul, entre l'axe longitudinal dudit au moins un canal 90 de communication fluidique et la zone d'appui du moyen 70 de rappel élastique sur la paroi périphérique 121 du fond 12 du corps 10 creux.

On aura donc compris que, de manière générale, cet agencement (à savoir l'agencement de la coupelle 124, du moyen 70 de rappel élastique et dudit au moins un canal 90 de communication fluidique par rapport à un fond défini de manière spécifique) permet d'obtenir une région du corps 10 creux, définie autour du tube 50 et au moins jusqu'audit au moins un canal de communication 90, libre de tout obstacle. Dans le cas d'espèce, cette région se présente sous la forme d'une couronne fluide autour du tube 50 (d'épaisseur D) et allant jusqu'à la zone centrale 120 (épaisseur d à ce niveau) du fond 12 du corps 10 creux.

Dans le cadre de l'invention, on a alors, notamment vis-à-vis du fonctionnement du tendeur proposé dans le document D1, en utilisation, un écoulement bien plus homogène, non perturbé, qui améliore le fonctionnement du tendeur, notamment en détente.

Le tendeur selon l'invention peut encore être amélioré.

Une amélioration envisageable concerne un deuxième mode de réalisation.

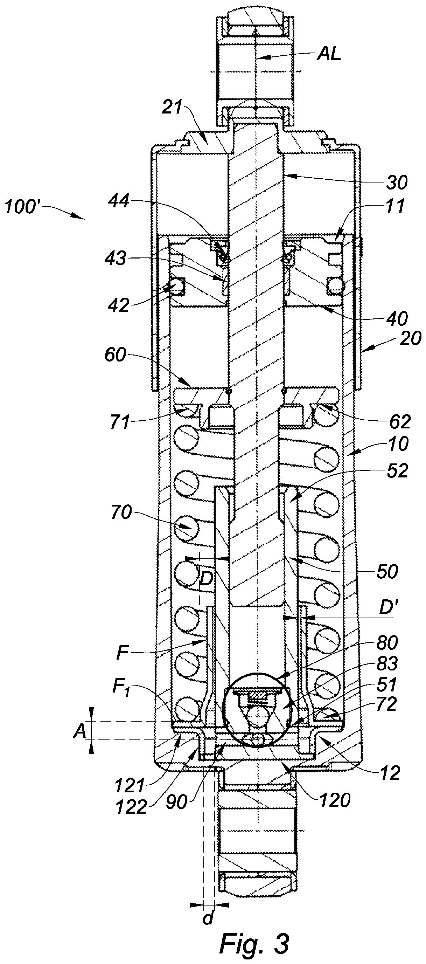

Ce deuxième mode de réalisation d'un tendeur 100' conforme à l'invention est représenté sur la figure 3.

Ce tendeur 100' est en tout point conforme au tendeur 100 de la figure 2, mais comporte en plus un fourreau F.

Le fourreau F présente une extrémité F1 reposant sur la coupelle 124.

Le moyen 70 de rappel élastique prend alors appui sur cette extrémité F1 du fourreau F.

Le fourreau F est par ailleurs agencé autour du tube 50 entre le moyen 70 de rappel élastique et le tube 50 à une distance D', non nulle, prise radialement, du tube 50. De ce fait, la région du corps 10 creux libre de tout obstacle est définie entre le fourreau F et le tube 50 jusqu'audit au moins un canal 90 de communication fluidique. On comprend de ces commentaires que la distance D' est strictement inférieure à la distance D.

En particulier, on pourra envisager que la distance D' soit également à la distance d.

Dans une variante (non représentée), on peut envisager que le fourreau F et la coupelle 124 ne forment qu'une seule pièce. Par ailleurs, dans l'hypothèse où la distance D' est égal à la distance d, alors le diamètre intérieur de cette pièce unique sera constant sur toute sa hauteur

On évite ainsi tout risque que le fluide, du fait de sa viscosité, soit perturbé par la présence et le mouvement du moyen 70 de rappel élastique, notamment au niveau de la paroi externe du tube 50.

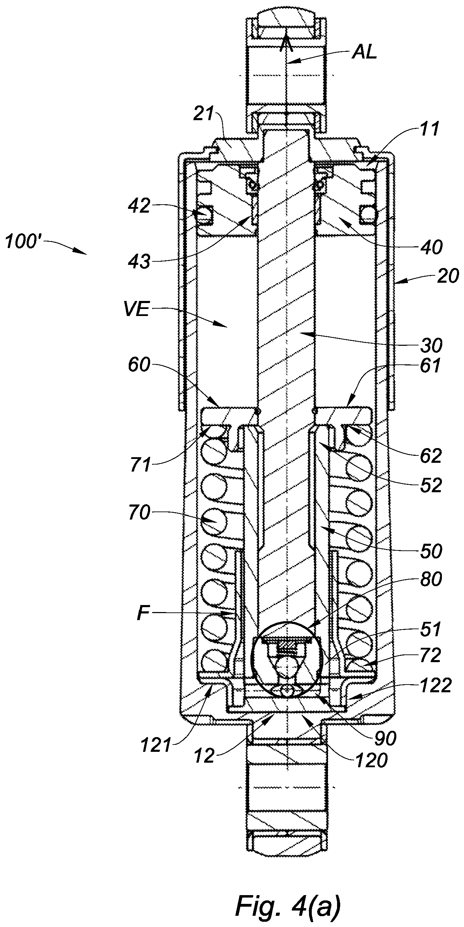

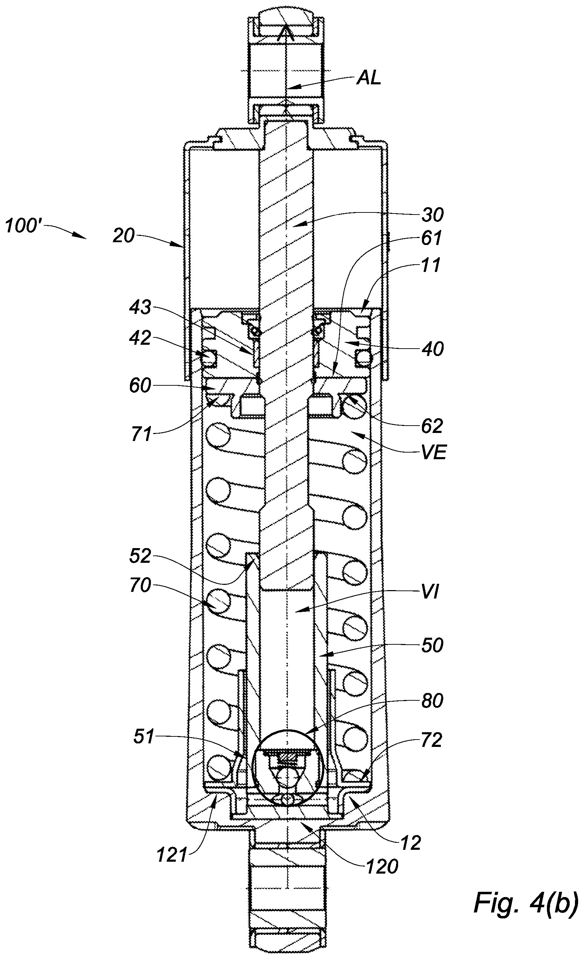

Les figures 4(a) et 4(b) permettent de préciser le fonctionnement du tendeur 100'.

La figure 4(a) est une vue en coupe longitudinale du tendeur 100', en compression et plus précisément en position maximale de compression. Dans cette position, on note que la paroi inférieure 62 de la coupelle 60 est au contact (mise en butée) de l'extrémité 52 (extrémité haute) du tube 50, qui est opposée à l'extrémité 51 (extrémité basse). L'axe 30 est alors au contact ou à proximité de la valve 80 si bien que le volume intérieur VI est nul ou quasiment nul. Tout le fluide contenu dans le corps 10 creux se situe donc dans le volume externe VE.

La figure 4(b) est une vue en coupe longitudinale du tendeur 100', en détente et plus précisément en position maximale de détente. Dans cette position, on note que le premier moyen 40 de guidage est au contact (mise en butée) de la coupelle 60, et plus précisément de la paroi supérieure 61 de la coupelle 60. Le volume interne VI est alors rempli à son maximum et le fluide est présent à la fois dans le volume interne VI et le volume externe VE.

Entre les deux figures 4(a) et 4(b), on note également le déplacement axial relatif entre le corps 10 creux et la chemise 20.

Le fonctionnement décrit ci-dessus à l'appui des figures 4(a) et 4(b) pour le deuxième mode de réalisation (figure 3) est tout à fait applicable au premier mode de réalisation (figure 2).

Il est également possible d'améliorer encore le fonctionnement du tendeur 100, 100', quel que soit le mode de réalisation, en dimensionnant correctement la valve 80.

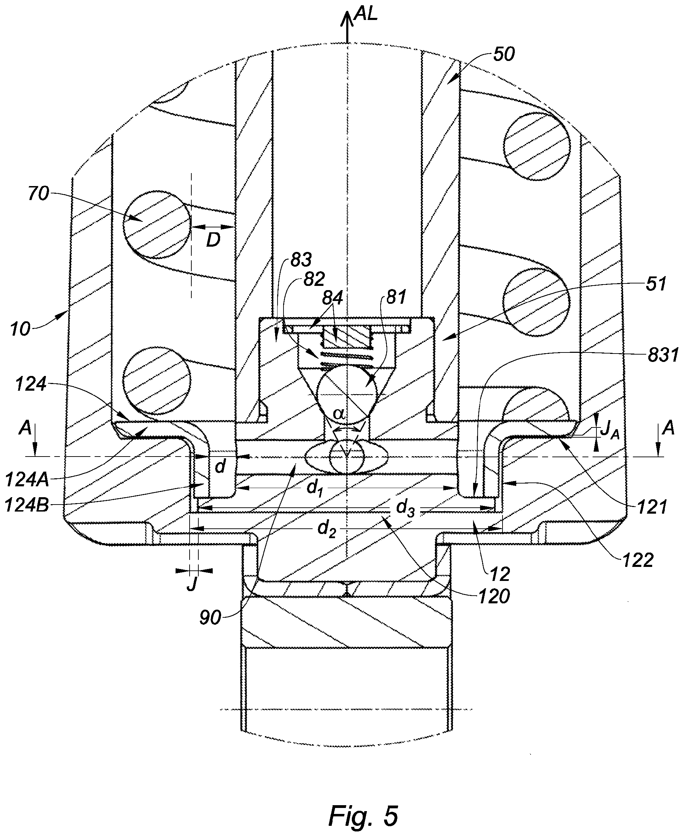

En référence à la figure 5, la valve 80 comprend un organe de fermeture 81, par exemple une bille, montée sur un moyen 82 de rappel élastique dédié, par exemple un ressort.

Le moyen 82 de rappel élastique dédié est fixe par rapport à l'embase 83. Plus précisément, sur cette figure 5, le moyen 82 de rappel élastique dédié est monté fixé sur une butée 84, pour l'organe 81 de fermeture, laquelle butée 84 est montée serrée sur l'embase 83. Cette butée permet de contrôler la course de l'organe 81 de fermeture, ce qui peut avoir un impact sur le bon fonctionnement du tendeur.

Il faut bien comprendre que la valve 80 décrite ci-dessus pour la figure 5, qui est une vue agrandie de la figure 2 relative au premier mode de réalisation est applicable au deuxième mode de réalisation (figure 3) car la valve 80 est la même dans les deux modes de réalisation.

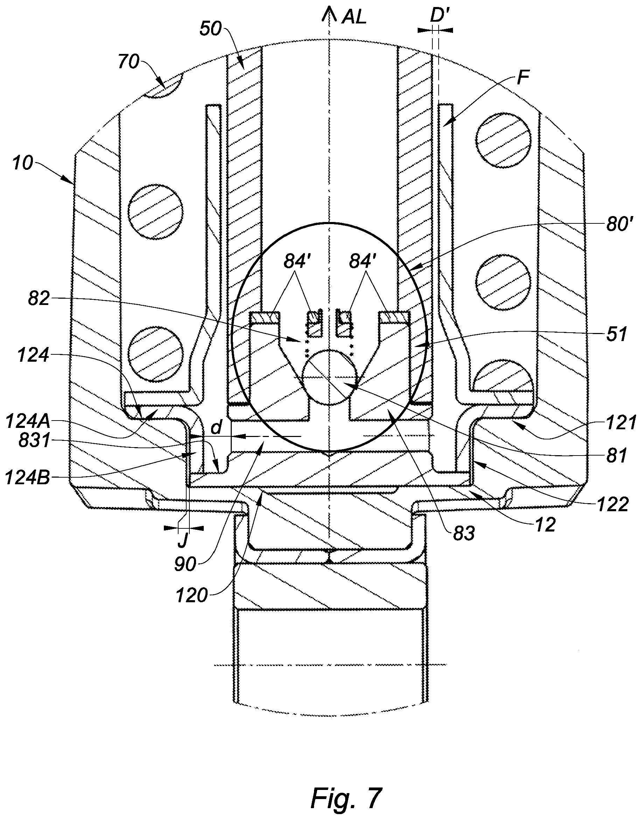

Dans une variante de réalisation de la valve 80', représentée sur la figure 7 à partir du deuxième mode de réalisation de la figure 3, la butée 84' peut être centrée sur le tube 50 et serrée axialement contre le tube 50 par l'embase 83. La butée 84' a alors la même fonction que la butée 84.

Il ne s'agit que d'une variante de montage.

Cela ne change rien à la fonctionnalité de la valve.

Par ailleurs, cette variante de réalisation est tout à fait applicable au premier mode de réalisation (figure 2).

Le moyen 82 de rappel élastique dédié est généralement précontraint pour faire en sorte d'exercer une force permanente, notamment utile au repos, pour maintenir l'organe de fermeture 81 contre l'embase 83 qui est fixée au tube 50, au niveau de son extrémité 51. L'embase 83 appartient donc à la valve 80 et sert également, comme indiqué précédemment, à faire le lien entre l'extrémité du tube 50 et la zone centrale 120 du fond 12 du corps 10 creux.

Cette force dépend de la raideur k du moyen 82 de rappel élastique dédié, mais aussi de la déformation de celui-ci par rapport à sa position naturelle d'équilibre.

La valve 80 est alors normalement fermée.

Dans le cas de l'utilisation d'une bille 81 comme organe de fermeture, une embase 83 de forme tronconique est particulièrement avantageuse. Elle permet une coopération optimale avec la bille 81.

En utilisation, le tendeur 100, 100' doit faire face à plusieurs contraintes.

A partir de la position de repos, si le tendeur 100, 100' est amené à se détendre, il est avantageux d'avoir un organe de fermeture, par exemple une bille 81, relativement légère. En effet, lors de la détente, la dépression dans le volume interne VI du tube 50 permet au fluide présent dans le volume externe VE d'entrer dans le volume interne VI et la rapidité de ce transfert de fluide est d'autant plus élevée que la bille est légère.

De manière similaire, lors d'une compression, il est d'intérêt que la bille soit également légère pour assurer une fermeture de la valve 80 et donc du tube 50 pour répondre le plus rapidement possible à la sollicitation exercée et en conséquence assurer une montée en pression rapide dans le volume interne VI.

Cependant, il convient aussi de prendre en compte la force exercée par le moyen 82 de rappel élastique dédié sur l'organe de fermeture 81.

Ici, la situation n'est pas symétrique selon que le tendeur 100, 100' est sollicité en détente ou en compression.

En effet, en détente, la présence du moyen 82 de rappel élastique dédié, qui permet d'exercer une force poussant l'organe 81 de fermeture contre son embase 83, est à vaincre (précharge). On a donc tout intérêt, pour assurer une réaction rapide du tendeur 100, 100' à minimiser la précharge, ce qui revient à minimiser la raideur k de moyen 82 de rappel élastique dédié et/ou son positionnement vis-à-vis de sa position naturelle d'équilibre.

Au contraire, en compression, on a tout intérêt à prévoir une précharge importante car celle-ci favorise une fermeture rapide de la valve 80.

En ce qui concerne la précharge, les exigences pour obtenir une réaction rapide du tendeur 100, 100' à la fois en détente et en compression sont donc contradictoires.

Cependant, la Demanderesse a pu constater, de façon surprenante, qu'il était possible de trouver un compromis intéressant sur la valeur de cette précharge pour assurer une ouverture (détente) ou une fermeture (compression) de la valve 80 plus rapide, étant entendu que ce compromis sur la précharge est aussi dépendant de la masse de la bille.

Selon la Demanderesse, ce compromis idéal peut être atteint avec:
- un organe de fermeture 81, de masse comprise entre 50mg et 700mg ; et
- une précharge comprise entre 0,05N et 0,4N, dans une direction poussant l'organe 81 de fermeture contre l'embase 83.

En pratique, on peut notamment employer un moyen 82 de rappel élastique dédié présentant une raideur comprise entre 30 N.m et 80 N.m. Il suffit alors de régler en conséquence la position du moyen 82 de rappel élastique dédié pour obtenir la précharge souhaitée. En particulier, avec un ressort classique, on contracte le ressort, par rapport à sa position d'équilibre naturel, de la valeur adéquate ΔX pour que le produit k*ΔX, qui correspond à la précharge, soit dans la gamme de valeurs indiquée précédemment.

Il est également utile que la course de l'organe 81 de fermeture soit encadrée entre deux valeurs limites. Une course minimum favorise le passage du fluide entre l'organe 81 de fermeture et l'embase 83 lors de la détente. Par ailleurs, une course maximum évite de pénaliser le temps de fermeture.

En pratique, une course de l'organe 81 de fermeture comprise entre 0,3 mm est 2,5 mm est envisageable. En particulier, on peut envisager une crouse de l'ordre de 1mm. Ceci permet d'améliorer la réalimentation du volume interne VI du tube 50 et de fermer ce même tube 50 correctement et plus facilement.

Comme indiqué précédemment, cette course peut être contrôlée par l'agencement de la butée 84, 84'.

Par ailleurs, lorsqu'une bille est employée en tant qu'organe 81 de fermeture, il est utile que l'embase 83 présente, dans sa partie interne, une forme tronconique pour coopérer avec la bille 81. Dans ce cas, l'angle α du cône (cf. figure 5 ou figure 7) est avantageusement compris entre 30° et 90°, notamment d'environ 60°.

Il convient enfin de noter que le choix du fluide de travail dans le tendeur 100, 100' peut aussi avoir un impact sur le fonctionnement du tendeur.

En pratique, on pourra utiliser une huile comme fluide de travail dans le tendeur 100, 100'.

Avantageusement, cette huile choisi présentera un grade choisi parmi les grades compris entre ISO VG5 et ISO VG150 définis par une viscosité cinématique selon la norme ISO3448. De manière avantageuse, on retiendra des grades compris entre ISO VG10 et ISO VG46. Ces grades permettent un bon fonctionnement du tendeur en temps de réponse et ceci dans les conditions thermomécaniques les plus sévères.

## Revendications

1. Tendeur (100, 100') avec un axe longitudinal (AL), comprenant :
- un corps (10) creux muni d'une ouverture (11) et d'un fond (12), le corps (10) creux comportant un fluide ;
- une chemise (20) agencée autour du corps creux,
- un axe (30),
- un premier moyen de guidage (40) pour ledit axe (30), ce premier moyen de guidage étant fixé sur le corps (10) creux au niveau de son ouverture (11) ;
- un deuxième moyen de guidage (50) pour ledit axe (30), ce deuxième moyen de guidage se présentant sous la forme d'un tube (50) définissant un volume interne (VI) dans lequel ledit axe (30) est destiné à se déplacer et un volume externe (VE) audit deuxième moyen de guidage (50) au sein du corps (10) creux ;
- une première coupelle (60) montée fixe sur ledit axe (30) entre les premier (40) et deuxième (50) moyens de guidage dudit axe (30) ;
- une deuxième coupelle (124) montée au niveau du fond (12) ;
- un moyen de rappel élastique (70) agencé autour du deuxième moyen de guidage (50) de sorte qu'il existe une distance (D) non nulle, prise radialement, entre le moyen (70) de rappel élastique et le deuxième moyen de guidage (50), ledit moyen (70) de rappel élastique étant maintenu entre la première coupelle (60) et la deuxième coupelle (124) ;
- une valve (80, 80') comportant une embase (83) montée entre une extrémité (51) du deuxième moyen de guidage (50) et le fond (12) du corps creux, valve à laquelle est associée au moins un canal (90) de communication fluidique pour autoriser le passage d'un fluide contenu dans le corps (10) creux entre le volume externe (VE) du deuxième moyen de guidage (50) et le volume interne (VI) audit deuxième moyen de guidage (50);
**caractérisé en ce que** :
- ledit fond (12) comprend une zone centrale (120), une zone périphérique (121) surélevée par rapport à la zone centrale (120) et une zone intermédiaire (122) reliant la zone centrale (120) à la zone périphérique (121) ;
- la première coupelle (124) comprend une première partie (124A) située en vis-à-vis de la zone périphérique (121) et, une deuxième partie (124B) en vis-à-vis de la zone intermédiaire (122) et en contact avec une base (831) de l'embase (83), cette base (831) étant elle-même en contact avec la zone centrale (120) ;
- le moyen de rappel élastique (70) est agencé pour prendre appui sur la première partie (124A) de la première coupelle (124) ;
- ledit au moins un canal (90) de communication fluidique est agencé pour déboucher en vis-à-vis de la deuxième partie (124B) de la première coupelle (124) à une distance (d) non nulle de cette deuxième partie (124B),
cet agencement permettant de définir une région fluide du corps (10) creux, définie autour du deuxième moyen de guidage (50) jusqu'audit au moins un canal de communication (90) libre de tout obstacle.

2. Tendeur (100, 100') selon la revendication 1, dans lequel la chemise (20) est montée mobile par rapport au corps (10) et l'axe (30) est monté fixe par rapport à la chemise (20).

3. Tendeur (100') selon l'une des revendications précédentes, dans lequel il est prévu un fourreau (F), dont une extrémité (F1) est au contact de la première partie (124A) de la première coupelle (124), le moyen (70) de rappel élastique prenant alors appui sur cette extrémité (F1) du fourreau (F), le fourreau (F) étant par ailleurs agencé autour du deuxième moyen de guidage (50) entre le moyen (70) de rappel élastique et le deuxième moyen de guidage (50) à une distance (D') non nulle, prise radialement, du deuxième moyen de guidage (50), de sorte que ladite région fluide du corps (10) creux libre de tout obstacle est définie entre le fourreau (F) et le deuxième moyen de guidage (50) jusqu'audit au moins un canal (90) de communication fluidique.

4. Tendeur (100, 100') selon l'une des revendications précédentes, dans lequel le moyen (70) de rappel élastique est un ressort hélicoïdal.

5. Tendeur (100, 100') selon l'une des revendications précédentes, dans lequel la base (831) de l'embase (83) présente une dimension, prise radialement, strictement inférieure à la dimension, également prise radialement, de la zone centrale (120) du fond (12) du corps (10) creux, de sorte qu'il existe un jeu (J), entre l'embase (83) et la zone intermédiaire (121).

6. Tendeur (100, 100') selon l'une des revendications précédentes, dans lequel la valve (80, 80') comprend, en outre :
- un moyen (82) de rappel élastique dédié, fixe par rapport à l'embase (83); et
- un organe de fermeture (81) attaché au moyen (82) de rappel élastique dédié et reposant sur l'embase (83).

7. Tendeur (100, 100') selon la revendication précédente, dans lequel l'organe (81) de fermeture présente une masse comprise entre 50mg et 700mg et dans lequel le moyen (82) de rappel élastique dédié est agencé pour appliquer une précharge comprise entre 0,05N et 0,4N dans une direction poussant l'organe (81) de fermeture contre l'embase (83).

8. Tendeur (100, 100') selon la revendication précédente, dans lequel le moyen (82) de rappel élastique dédié présente une raideur k comprise entre 30 N.m et 80 N.m.

9. Tendeur (100, 100') selon l'une des revendications précédentes, dans lequel la valve (80, 80') comporte une butée (84, 84') agencée pour contrôler la course de l'organe (81) de fermeture.

10. Tendeur (100, 100') selon la revendication précédente, dans lequel la course de l'organe (81) de fermeture est comprise entre 0,3mm et 2,5mm.

11. Tendeur (100, 100') selon l'une des revendications 6 à 10, dans lequel, l'organe de fermeture étant une bille (81), l'embase (83) comporte une partie interne tronconique pour coopérer avec la bille, cette partie interne tronconique étant définie par un angle (a) compris entre 30° et 90°.

12. Tendeur (100, 100') selon l'une des revendications précédentes, dans lequel le fluide contenu dans le corps (10) creux est une huile.

13. Tendeur (100, 100') selon la revendication précédente dans lequel l'huile présente un grade défini entre la norme ISO VG5 et la norme ISO VG150, ces normes étant définies par une viscosité cinématique selon la norme ISO 3448.

## Patentansprüche

1. Spanner (100, 100') mit einer Längsachse (AL), umfassend:
- einen Hohlkörper (10), der mit einer Öffnung (11) und einem Boden (12) versehen ist, wobei der Hohlkörper (10) ein Fluid umfasst;
- einen Mantel (20), der um den Hohlkörper angeordnet ist,
- eine Achse (30),
- ein erstes Führungsmittel (40) für die Achse (30), wobei dieses erste Führungsmittel an dem Hohlkörper (10) im Bereich seiner Öffnung (11) befestigt ist;
- ein zweites Führungsmittel (50) für die Achse (30), wobei dieses zweite Führungsmittel in der Form eines Rohrs (50) vorliegt, das ein Innenvolumen (VI) definiert, in dem sich die Achse (30) bewegen soll, und ein Außenvolumen (VE) des zweiten Führungsmittels (50) innerhalb des Hohlkörpers (10) definiert;
- einen ersten Teller (60), der fest auf der Achse (30) zwischen dem ersten (40) und dem zweiten (50) Führungsmittel der Achse (30) montiert ist;
- einen zweiten Teller (124), der im Bereich des Bodens (12) montiert ist;
- ein elastisches Rückstellmittel (70), das so um das zweite Führungsmittel (50) herum angeordnet ist, dass zwischen dem elastischen Rückstellmittel (70) und dem zweiten Führungsmittel (50), radial gesehen, ein Abstand (D) ungleich Null vorhanden ist, wobei das elastische Rückstellmittel (70) zwischen dem ersten Teller (60) und dem zweiten Teller (124) gehalten wird;
- ein Ventil (80, 80'), ein Unterteil (83) umfassend, das zwischen einem Ende (51) des zweiten Führungsmittels (50) und dem Boden (12) des Hohlkörpers montiert ist, Ventil, dem mindestens ein Fluidverbindungskanal (90) zugeordnet ist, um den Durchgang eines in dem Hohlkörper (10) enthaltenen Fluids zwischen dem Außenvolumen (VE) des zweiten Führungsmittels (50) und dem Innenvolumen (VI) des zweiten Führungsmittels (50) zu ermöglichen;
**dadurch gekennzeichnet, dass**
- der Boden (12) einen zentralen Bereich (120), einen in Bezug auf den zentralen Bereich (120) erhöhten peripheren Bereich (121) und einen Zwischenbereich (122) umfasst, der den zentralen Bereich (120) mit dem peripheren Bereich (121) verbindet;
- der erste Teller (124) einen ersten Teil (124A) umfasst, der dem peripheren Bereich (121) gegenüberliegt, und einen zweiten Teil (124B), der dem Zwischenbereich (122) gegenüberliegt und in Kontakt mit einer Basis (831) des Unterteils (83) steht, wobei diese Basis (831) selbst in Kontakt mit dem zentralen Bereich (120) steht;
- das elastische Rückstellmittel (70) so angeordnet ist, dass es auf dem ersten Teil (124A) des ersten Tellers (124) aufliegt;
- der mindestens ein Fluidverbindungskanal (90) so angeordnet ist, dass er gegenüber dem zweiten Teil (124B) des ersten Tellers (124) in einem Abstand (d) ungleich Null zu diesem zweiten Teil (124B) mündet,
wobei diese Anordnung es ermöglicht, einen Fluidbereich des Hohlkörpers (10) zu definieren, der um das zweite Führungsmittel (50) herum bis zu dem mindestens einen Verbindungskanal (90) hindernisfrei definiert ist.

2. Spanner (100, 100') nach Anspruch 1, worin der Mantel (20) bezogen auf den Körper (10) beweglich montiert ist und die Achse (30) bezogen auf den Mantel (20) fest montiert ist.

3. Spanner (100') nach einem der vorstehenden Ansprüche, worin eine Hülse (F) vorgesehen ist, deren eines Ende (F1) mit dem ersten Teil (124A) des ersten Tellers (124) in Kontakt steht, wobei das elastische Rückstellmittel (70) dann an diesem Ende (F1) der Hülse (F) aufliegt, wobei die Hülse (F) außerdem um das zweite Führungsmittel (50) herum zwischen dem elastischen Rückstellmittel (70) und dem zweiten Führungsmittel (50), radial gesehen, in einem Abstand (D') ungleich Null von dem zweiten Führungsmittel (50) angeordnet ist, so dass der hindernisfreie Fluidbereich des Hohlkörpers (10) zwischen der Hülse (F) und dem zweiten Führungsmittel (50) bis zu dem mindestens einen Fluidverbindungskanal (90) definiert ist.

4. Spanner (100, 100') nach einem der vorstehenden Ansprüche, worin das elastische Rückstellmittel (70) eine Schraubenfeder ist.

5. Spanner (100, 100') nach einem der vorstehenden Ansprüche, worin die Basis (831) des Unterteils (83), radial gesehen, eine Abmessung aufweist, die strikt kleiner ist als die Abmessung, ebenfalls radial gesehen, des zentralen Bereichs (120) des Bodens (12) des Hohlkörpers (10), so dass ein Spiel (J) zwischen dem Unterteil (83) und dem Zwischenbereich (121) besteht.

6. Spanner (100, 100') nach einem der vorstehenden Ansprüche, worin das Ventil (80, 80') weiter umfasst:
- ein spezielles elastisches Rückstellmittel (82), das in Bezug auf das Unterteil (83) feststeht; und
- ein Schließorgan (81), das an dem speziellen elastischen Rückstellmittel (82) befestigt ist und auf dem Unterteil (83) ruht.

7. Spanner (100, 100') nach dem vorstehenden Anspruch, worin das Schließorgan (81) eine Masse zwischen 50 mg und 700 mg aufweist und worin das spezielle elastische Rückstellmittel (82) so angeordnet ist, dass es eine Vorspannung zwischen 0,05 N und 0,4 N in einer Richtung ausübt, die das Schließorgan (81) gegen das Unterteil (83) drückt.

8. Spanner (100, 100') nach dem vorstehenden Anspruch, worin das spezielle elastische Rückstellmittel (82) eine Steifigkeit k zwischen 30 N.m und 80 N.m aufweist.

9. Spanner (100, 100') nach einem der vorstehenden Ansprüche, worin das Ventil (80, 80') einen Anschlag (84, 84') umfasst, der so angeordnet ist, dass er den Hub des Schließorgans (81) steuert.

10. Spanner (100, 100') nach dem vorstehenden Anspruch, worin der Hub des Schließorgans (81) zwischen 0,3 mm und 2,5 mm liegt.

11. Spanner (100, 100') nach einem der Ansprüche 6 bis 10, worin, da das Schließorgan eine Kugel (81) ist, das Unterteil (83) ein kegelstumpfförmiges Innenteil zum Zusammenwirken mit der Kugel umfasst, wobei dieses kegelstumpfförmige Innenteil durch einen Winkel (a) zwischen 30° und 90° definiert ist.

12. Spanner (100, 100') nach einem der vorstehenden Ansprüche, worin das in dem Hohlkörper (10) enthaltene Fluid ein Öl ist.

13. Spanner (100, 100') nach dem vorstehenden Anspruch, worin das Öl einen Grad aufweist, der zwischen der Norm ISO VG5 und der Norm ISO VG150 definiert ist, wobei diese Normen durch eine kinematische Viskosität nach der Norm ISO 3448 definiert sind.

## Claims

1. Tensioner (100, 100') with a longitudinal axis (AL), comprising:
- a hollow body (10) provided with an opening (11) and a bottom (12), the hollow body (10) comprising a fluid;
- a sleeve (20) arranged around the hollow body,
- an axis (30),
- a first guide means (40) for said axis (30), this first guide means being attached to the hollow body (10) at the opening (11) thereof;
- a second guide means (50) for said axis (30), this second guide means being in the form of a tube (50) that defines an inner volume (VI) wherein said axis (30) is intended to move and an outer volume (VE) that is outside said second guide means (50) within the hollow body (10);
- a first cup (60) fixedly mounted on said axis (30) between the first (40) and second (50) guide means of said axis (30);
- a second cup (124) mounted at the bottom (12);
- an elastic return means (70) arranged around the second guide means (50) so that there is a non-zero distance (D), taken radially, between the elastic return means (70) and the second guide means (50), said elastic return means (70) being held between the first cup (60) and the second cup (124);
- a valve (80, 80') comprising a seat (83) mounted between one end (51) of the second guide means (50) and the bottom (12) of the hollow body, with which valve at least one fluid communication channel (90) is associated to allow the passage of a fluid contained in the hollow body (10) between the outer volume (VE) of the second guide means (50) and the inner volume (VI) of said second guide means (50),
**characterised in that**:
- said bottom (12) comprises a central zone (120), a peripheral zone (121) that is raised relative to the central zone (120) and an intermediate zone (122) connecting the central zone (120) to the peripheral zone (121);
- the first cup (124) comprises a first portion (124A) in front of the peripheral zone (121) and a second portion (124B) that is in front of the intermediate zone (122) and is in contact with a base (831) of the seat (83), this base (831) itself being in contact with the central zone (120);
- the elastic return means (70) is designed to bear on the first portion (124A) of the first cup (124);
- said at least one fluid communication channel (90) is arranged to open in front of the second portion (124B) of the first cup (124) at a non-zero distance (d) from this second portion (124B), this arrangement allowing a fluid region of the hollow body (10) to be defined around the second guide means (50) up to said at least one communication channel (90), said fluid region being free of any obstacle.

2. Tensioner (100, 100') according to claim 1, wherein the sleeve (20) is movably mounted relative to the body (10) and the axis (30) is fixedly mounted relative to the sleeve (20).

3. Tensioner (100') according to any of the preceding claims, wherein a sheath (F) is provided, one end (F1) of which is in contact with the first portion (124A) of the first cup (124), the elastic return means (70) then bearing on this end (F1) of the sheath (F), the sheath (F) being furthermore arranged around the second guide means (50) between the elastic return means (70) and the second guide means (50) at a non-zero distance (D'), taken radially, from the second guide means (50), so that said fluid region of the hollow body (10) that is free of any obstacle is defined between the sheath (F) and the second guide means (50) up to said at least one fluid communication channel (90).

4. Tensioner (100, 100') according to any of the preceding claims, wherein the elastic return means (70) is a helical spring.

5. Tensioner (100, 100') according to any of the preceding claims, wherein the base (831) of the seat (83) has a dimension, taken radially, that is strictly smaller than the dimension, also taken radially, of the central zone (120) of the bottom (12) of the hollow body (10), so that there is a clearance (J) between the seat (83) and the intermediate zone (121).

6. Tensioner (100, 100') according to any of the preceding claims, wherein the valve (80, 80') further comprises:
- a dedicated elastic return means (82) that is fixed relative to the base (83); and
- a closure member (81) that is attached to the dedicated elastic return means (82) and rests on the seat (83).

7. Tensioner (100, 100') according to the preceding claim, wherein the closure member (81) has a mass of between 50 mg and 700 mg and wherein the dedicated elastic return means (82) is designed to apply a preload of between 0.05 N and 0.4 N in a direction so as to push the closing member (81) against the seat (83).

8. Tensioner (100, 100') according to the preceding claim, wherein the dedicated elastic return means (82) has a stiffness k of between 30 N.m. and 80 N.m.

9. Tensioner (100, 100') according to any of the preceding claims, wherein the valve (80, 80') comprises a stop (84, 84') designed to control the travel of the closure member (81).

10. Tensioner (100, 100') according to the preceding claim, wherein the travel of the closure member (81) is between 0.3 mm and 2.5 mm.

11. Tensioner (100, 100') according to any of claims 6 to 10, wherein, the closure member being a ball (81), the seat (83) comprises a frustoconical inner portion for cooperating with the ball, this frustoconical inner portion being defined by an angle (a) of between 30° and 90°.

12. Tensioner (100, 100') according to any of the preceding claims, wherein the fluid contained in the hollow body (10) is an oil.

13. Tensioner (100, 100') according to the preceding claim, wherein the oil has a grade defined between the ISO VG5 standard and the ISO VG150 standard, these standards being defined by a kinematic viscosity according to the ISO 3448 standard.
